# EUROPEAN PATENT APPLICATION

(11) **EP 4 693 634 A1**
(43) Date of publication of application: **11.02.2026**
(21) Application number: 24779849.9
(22) Date of filing: 21.03.2024
(51) Int. Cl.: H01M 50/107, H01G 11/80, H01M 10/0566, H01M 50/55, H01M 50/152, H01M 50/167, H01M 50/184, H01M 50/186, H01M 50/559, H01M 10/052, H01M 10/0587

(54) **POWER STORAGE DEVICE**

(30) Priority: 31.03.2023 JP 2023058094; 31.03.2023 JP 2023058179
(71) Applicant: Panasonic Intellectual Property Management Co., Ltd., Kadoma-shi, Osaka 571-0057 (JP)
(72) Inventor: IWAMA Yuta, Kadoma-shi, Osaka 571-0057 J (JP); GESHI Shinya, Kadoma-shi, Osaka 571-0057 J (JP); KATO Yudai, Kadoma-shi, Osaka 571-0057 J (JP)
(74) Representative: Eisenführ Speiser
(86) International application number: PCT/JP2024/011042
(87) International publication number: WO 2024/203729

(57) **Abstract**

A power storage device (10) includes: an electrode body (14) that is obtained by winding a positive electrode sheet (11) and a negative electrode sheet (12) with a separator (13) therebetween; an electrolyte solution; a bottomed cylindrical outer can (20) that accommodates the electrode body (14) and the electrolyte solution, and has a flange part (20C) extending radially inward from the open end; a sealing body (30) that closes the open portion of the outer can (20); and an annular gasket (33) that is interposed between the outer can (20) and the sealing body (30). The flange part (20C) has a first surface that faces the gasket (33) and a second surface that is the rear surface of the first surface. The power storage device (10) further has a first concave/convex portion (51) where at least one of the first surface and the second surface is formed in a concave shape and/or a convex shape.

## Description

### TECHNICAL FIELD

The present disclosure relates to a power storage device.

### BACKGROUND ART

A power storage device includes: an electrode assembly that includes a positive electrode plate and a negative electrode plate that are wound with a separator intervening therebetween; an electrolytic solution; a closed-bottom-cylindrical-shaped outer can that stores the electrode assembly and the electrolytic solution; a sealing assembly that blocks an opening portion of the outer can; and a ring-shaped gasket that intervenes between the outer can and the sealing assembly (e.g., Patent Literature 1).

The power storage device is mounted in an electric vehicle in some cases. In recent years, to extend the cruising distance of an electric vehicle, a high capacity and high output power storage device is required.

### CITATION LIST

### PATENT LITERATURE

PATENT LITERATURE 1: Japanese Unexamined Patent Application Publication No. 2012-174563

### SUMMARY

Unfortunately, a high-capacity and high-output power storage device is required to further improve reliability.

Accordingly, it is an advantage of the present disclosure to provide a power storage device that may improve the reliability.

A power storage device according to the present disclosure comprises: an electrode assembly that includes a first electrode plate and a second electrode plate that are wound with a separator intervening therebetween; an electrolytic solution; a closed-bottom-cylindrical-shaped outer can that stores the electrode assembly and the electrolytic solution, and includes a shoulder portion extending inward in a radial direction from an open end; a sealing assembly that blocks an opening portion of the outer can; and a ring-shaped gasket that intervenes between the outer can and the sealing assembly, wherein the shoulder portion has a first surface that faces the gasket, and a second surface that is a back surface of the first surface, and at least one of the first surface and the second surface has a first irregular portion formed to be concave and/or convex.

According to the power storage device in the present disclosure, the reliability may be improved.

### BRIEF DESCRIPTION OF DRAWING

FIG. 1 is an axial-direction sectional view showing a power storage device that is an example of one embodiment.
FIG. 2 is an axial-direction sectional view showing an opening side of the power storage device that is the one example of an embodiment.
FIG. 3 is a schematic diagram showing a state where the internal pressure of the power storage device increases.
FIG. 4 is an axial-direction sectional view showing an opening side of a power storage device that is another example of an embodiment.
FIG. 5 is an axial-direction sectional view showing a power storage device that is another example of the embodiment.
FIG. 6 is an axial-direction sectional view showing an opening side of the power storage device that is the other example of the other embodiment.
FIG. 7 is a schematic diagram showing a state where the internal pressure of the power storage device increases.
FIG. 8 is an axial-direction sectional view showing an opening side of a power storage device that is another example of an embodiment.
FIG. 9 is an axial-direction sectional view showing an opening side of a power storage device that is another example of an embodiment.

### DESCRIPTION OF EMBODIMENTS

An example of an embodiment of the present disclosure is described in detail below. In the following description, specific shapes, materials, directions, numerical values and the like are examples to facilitate understanding of the present disclosure, and can be changed as appropriate depending on the application, purpose, specifications and the like.

### [Power Storage Device]

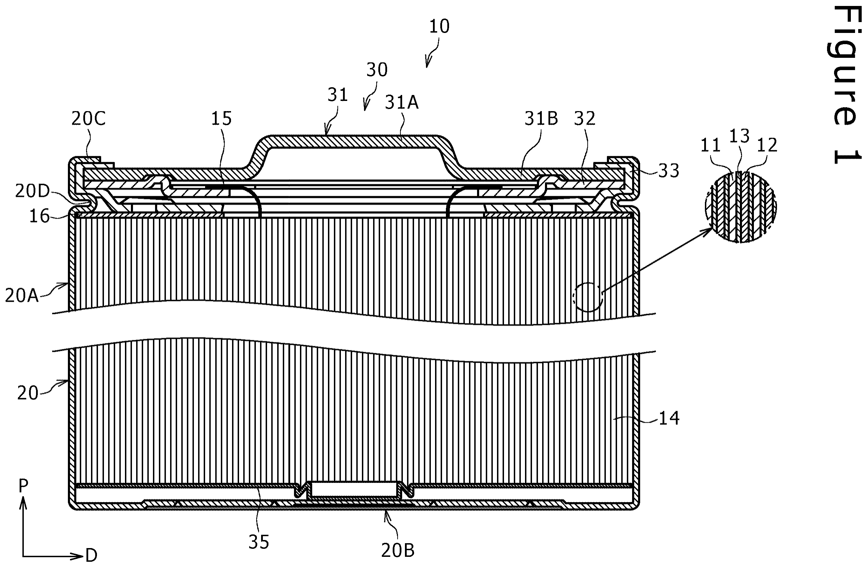

Referring to FIG. 1, a power storage device 10 that is an example of an embodiment is described.

The power storage device 10 is used as, for example, a power source of an electric vehicle. However, the power storage device in the present disclosure is not limited to the power source of an electric vehicle, and may be used as, for example, a power source of an electric tool, an electric-assisted bicycle, an electric motorcycle, an electric wheelchair, an electric tricycle, an electric cart, or other electric powered equipment driven by a motor. The power storage device in the present disclosure may be used as, for example, a power source for a cleaner, a wireless device, a lighting device, a digital camera, a video camera, or other various types of electric equipment that are used indoors and outdoors.

The power storage device 10 includes: a wound-type electrode assembly 14 where a positive electrode plate 11 as a first polar plate, and a negative electrode plate 12 as a second polar plate are wound together, with a separator 13 intervening therebetween; an outer can 20 that accommodates the electrode assembly 14; and a sealing assembly 30 that blocks an opening of the outer can 20. The outer can 20 stores an electrolytic solution along with the electrode assembly 14. The electrolytic solution in the present embodiment is non-aqueous electrolytic solution, but may be aqueous electrolytic solution. The power storage device 10 may be a capacitor.

In the following, each component is sometimes described using an axial direction P, a circumferential direction R, and a radial direction D. For convenience of description, it is sometimes described assuming that in the axial direction P, a side on which the sealing assembly 30 is provided is an upper side, and a side on which a bottom portion 20B of the outer can 20 is formed is a lower side.

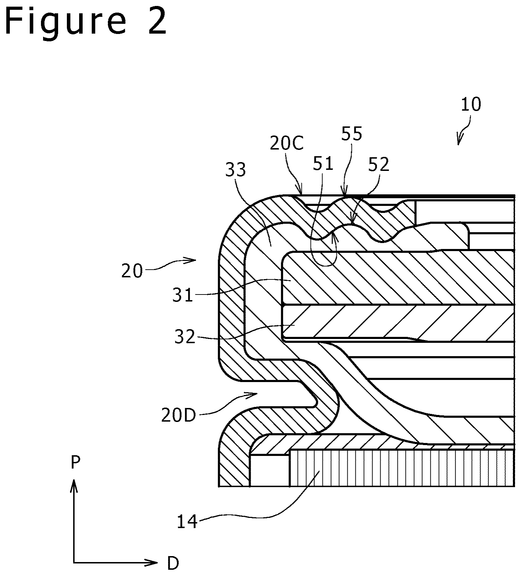

Although the details are described later, in the power storage device 10, the outer can 20 has a first irregular portion 51 that is a surface of the shoulder portion 20C that faces the gasket 33 and is formed to be concave and/or convex, and the gasket 33 has a second irregular portion 52 that is a surface that faces the shoulder portion 20C, is formed to be concave and/or convex, and is fitted to the first irregular portion 51 (see FIG. 2). The first irregular portion 51 and the second irregular portion 52 can improve the reliability of the power storage device 10.

The positive electrode plate 11, the negative electrode plate 12, and the separator 13 are strip-shaped elongated bodies, and spirally wound. In this case, the positive electrode plate 11 and the negative electrode plate 12 are stacked in a deviating manner so as to protrude oppositely from each other, in the axial direction P (the height direction of the power storage device 10). The composite agent layer of the negative electrode plate 12 may be formed to have a dimension one size larger than the composite agent layer of the positive electrode plate 11 in order to prevent lithium from depositing. That is, the composite agent layer of the negative electrode plate 12 may be formed longer than the composite agent layer of the positive electrode plate 11 in the longitudinal direction and the width direction (transverse direction). The separator 13 is formed to have a dimension at least one size larger than the positive electrode plate 11. For example, two separators 13 are disposed so as to sandwich the positive electrode plate 11. Note that the electrode assembly 14 is not necessarily configured in the state where the positive electrode plate 11 and the negative electrode plate 12 are wound. For example, the electrode assembly 14 may be configured such that a plurality of positive electrode plates 11 and a plurality of negative electrode plates 12 are alternately stacked.

The positive electrode plate 11 includes a positive electrode core, and a positive electrode composite agent layer formed on at least one surface of the core. The positive electrode core may be made of, for example, metal foil that is stable in the potential range of the positive electrode plate 11, such as of aluminum or an aluminum alloy, a film on which the metal is disposed as the surface layer, or the like. Preferably, the positive electrode composite agent layer contains, for example, a positive-electrode active material, a conductive agent such as acetylene black, and a binding agent such as polyvinylidene fluoride, and is formed on each of the opposite surfaces of the positive electrode core. For example, a lithium transition metal composite oxide is used as the positive-electrode active material.

The negative electrode plate 12 includes a negative electrode core, and a negative electrode composite agent layer formed on at least one surface of the core. The negative electrode core may be made of, for example, metal foil that is stable in the potential range of the negative electrode plate 12, such as of copper or a copper alloy, a film on which the metal is disposed as the surface layer, or the like. Preferably, the negative electrode composite agent layer contains, for example, a negative-electrode active material, and a binding agent such as styrene-butadiene rubber (SBR), and is formed on each of the opposite surfaces of the negative electrode core. For example, graphite, a silicon-containing compound or the like is used as the negative-electrode active material.

The non-aqueous electrolyte housed in the outer can 20 contains a non-aqueous solvent, and electrolyte salt dissolved in the non-aqueous solvent. The non-aqueous solvent may be, for example, any one of esters, ethers, nitriles, or amides, a composite solvent of two or more of them, etc. The non-aqueous solvent may contain a halogen-substituted compound made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF6. Note that the non-aqueous electrolyte may be gel electrolyte, solid electrolyte or the like instead of the electrolytic solution.

A positive electrode lead 15 that extends from the axial-direction-P upper end of the electrode assembly 14, and connects the positive electrode plate 11 included in the electrode assembly 14 and the current collector plate 32 of the sealing assembly 30 to each other, and an upper insulating plate 16 disposed between the electrode assembly 14 and the sealing assembly 30 are provided above the electrode assembly 14. The positive electrode lead 15 electrically connects the positive electrode plate 11 and the sealing assembly 30 to each other. Accordingly, a positive electrode cap 31 of the sealing assembly 30 functions as a first polar external terminal (positive electrode plate external terminal). The upper insulating plate 16 prevents the positive electrode plate 11 and the positive electrode lead 15 from coming into contact with the outer can 20, and also prevents the positive electrode lead 15 from coming into contact with the negative electrode plate 12 of the electrode assembly 14.

Under the electrode assembly 14 there is provided a negative electrode current collector plate 35. A negative electrode core exposed portion (not shown) provided with no negative electrode composite agent layer in the negative electrode core material protrudes on the lower side of the negative electrode plate 12 in the axial direction P. The negative electrode core exposed portion is formed from an end of the elongated negative electrode plate 12 on a winding initiation side in the longitudinal direction (circumferential direction R) to an end of its winding completion side. The negative electrode core exposed portion is joined to the negative electrode current collector plate 35, and the negative electrode plate 12 and the negative electrode current collector plate 35 are electrically connected to each other. Furthermore, the negative electrode current collector plate 35 is joined to the inner surface of the bottom portion 20B of the outer can 20, and the negative electrode current collector plate 35 and the outer can 20 are electrically connected to each other.

The outer can 20 is a metal container that has a closed-bottom cylindrical shape with the upper end in the axial direction P being open. The outer can 20 is generally made of metal, with iron as the principal component, but may be made of metal, with aluminum or the like as the principal component, in a case where the positive electrode plate 11 is connected. The outer can 20 includes: a cylindrical portion 20A that is formed to have a cylindrical shape; a bottom portion 20B that has a circular shape in bottom view; a shoulder portion 20C that is formed to have a ring shape extending inward in the circumferential direction R from the opening end of the cylindrical portion 20A; and a groove portion 20D that is formed along the circumferential direction R of the cylindrical portion 20A. Note that in the power storage device in the present disclosure, the outer can and the positive electrode plate may be electrically connected to each other, and the sealing plate and the negative electrode plate may be electrically connected to each other.

The groove portion 20D is formed adjacent to the opening of the outer can 20 at a position apart from the shoulder portion 20C by a predetermined length. The groove portion 20D is a portion that is part of the cylindrical portion 20A projecting to the inside of the outer can 20, and is formed by applying a spinning process to the cylindrical portion 20A from the outside, for example. Note that at the position where the groove portion 20D is formed, the outer can 20 has a reduced diameter, and a narrow-lined groove is formed in the outer-peripheral surface of the cylindrical portion 20A. Preferably, the groove portion 20D has a substantially U-shaped section, and is formed to have a ring shape over the entire length of the cylindrical portion 20A in the circumferential direction R.

The bottom portion 20B of the outer can 20 is provided with a safety valve mechanism that activates when an abnormality occurs in the power storage device 10. For example, a circular-ring-shaped engraved mark may be formed as a safety valve mechanism at the bottom portion 20B. When an abnormality occurs in the power storage device 10 and the internal pressure increases, the engraved mark may preferentially fracture, and a gas outlet may be formed in the bottom portion 20B. In a case where the negative electrode current collector plate 35 also serves as the bottom portion 20B, the negative electrode current collector plate 35 may be provided with an engraved mark so as to allow the engraved mark to fracture and release the gas when the internal pressure in the power storage device 10 may become a predetermined one or higher.

The sealing assembly 30 is formed to have a disk shape as a whole, and includes the positive electrode cap 31, the current collector plate 32, and the gasket 33. The sealing assembly 30 is disposed above the groove portion 20D of the outer can 20, and is fixed to the upper end portion of the outer can 20. In more detail, the shoulder portion 20C of the outer can 20 is bent inward in the radial direction D and swagged to the sealing assembly 30, the sealing assembly 30 is fixed to the upper end portion of the outer can 20 by the shoulder portion 20C and the groove portion 20D of the outer can 20, and the sealing assembly 30 blocks the opening of the outer can 20.

The positive electrode cap 31 is electrically connected to the positive electrode plate 11 via the positive electrode lead 15 and the current collector plate 32, and functions as a positive electrode plate external terminal. The positive electrode cap 31 is a disk-shaped metal member, and includes: an elevated portion 31A whose center portion in the radial direction D protrudes to the outside of the power storage device 10; and a flange portion 31B formed around the elevated portion 31A. The positive electrode cap 31 is disposed on the upper surface side of the sealing assembly 30, and is exposed outside the outer can 20, thus forming a top surface of the power storage device 10. A positive electrode plate tab or the like of the current collector member of the power storage module is joined by welding to the elevated portion 31A.

The current collector plate 32 is electrically connected to the positive electrode plate 11 via the positive electrode lead 15, and functions as a positive electrode plate current collector plate. The current collector plate 32 is a metal member that has a diameter comparable to that of the positive electrode cap 31. The current collector plate 32 is formed to have a ring shape that has an opening at a center portion in the radial direction D. The current collector plate 32 is disposed closer to the electrode assembly 14 than the positive electrode cap 31. The current collector plate 32 is welded to the positive electrode cap 31, and is thus welded, for example, at a position closer to the outer peripheral edge of the positive electrode cap 31 than its center in the radial direction D.

The gasket 33 is a rubber member or a plastic member that prevents the positive electrode cap 31 and the current collector plate 32 from coming into contact with the outer can 20, and secures electrical insulation between the outer can 20 and the sealing assembly 30. The gasket 33 blocks the gap between the outer can 20 and the sealing assembly 30, and seals the inside of the power storage device 10. The gasket 33 is provided between the outer peripheral portion of the stacked body of the positive electrode cap 31 and the current collector plate 32, and the outer can 20. The gasket 33 covers the upper surface of the flange portion 31B of the positive electrode cap 31, the side surfaces of the positive electrode cap 31 and the current collector plate 32, and the lower surface of the current collector plate 32, at the outer peripheral portion of the stacked body.

### [First Irregular Portion and Second Irregular Portion]

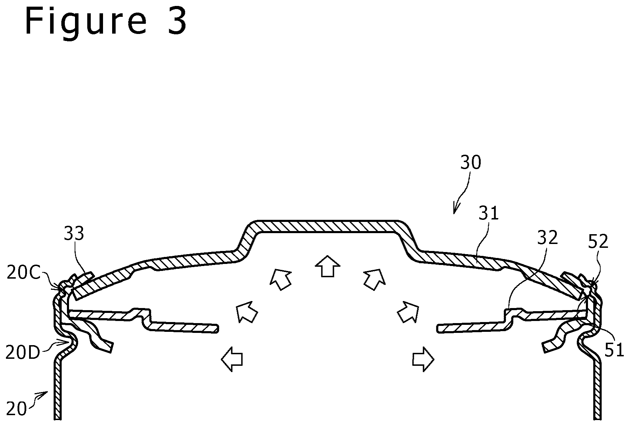

Referring to FIGS. 2 and 3, the first irregular portion 51 and the second irregular portion 52 are described.

As shown in FIG. 2, the outer can 20 has the first irregular portion 51 that includes a surface of the shoulder portion 20C that faces the gasket 33 and is formed to be concave and/or convex. The gasket 33 has the second irregular portion 52 that includes a surface that faces the shoulder portion 20C, is formed to be concave and/or convex, and is fitted to the first irregular portion 51. Note that in the present disclosure, the second irregular portion 52 fitted to the first irregular portion 51 also encompasses a feature where the gasket 33 made of an electric body is pressed by the first irregular portion 51 and is deformed to follow the shape of the first irregular portion 51.

The power storage device 10 is mounted in an electric vehicle in some cases as described above. In recent years, to extend the cruising distance of an electric vehicle, a high capacity and high output power storage device is required. However, the high-capacity and high-output power storage device 10 has a higher internal pressure that occurs in the event of thermal runaway than the conventional power storage device does. Accordingly, the reliability is required to be improved by improving the strength of the sealing structure of the power storage device 10.

According to the first irregular portion 51 and the second irregular portion 52, the first irregular portion 51 and the second irregular portion 52 are fitted to each other, which increases the frictional force between the shoulder portion 20C and the gasket 33, and can improve the strength of the sealing structure of the power storage device 10. Accordingly, the sealing assembly 30 is resistant to removal from the outer can 20 in the event of thermal runaway, and the contents of the power storage device 10 are prevented from dispersing. As a result, the reliability of the power storage device 10 can be improved.

The first irregular portion 51 is formed to be concave and/or convex, which increases the second moment of area, and can improve the strength. At the same time, the second irregular portion 52 is formed to be concave and/or convex, which increases the second moment of area, and can improve the strength. Accordingly, the strength of the sealing structure of the power storage device 10 can be improved. The shoulder portion 20C may have a fifth irregular portion 55 formed on a surface (upper surface) on a reverse side of the surface on which the first irregular portion 51 is formed. The area where the fifth irregular portion 55 is formed may overlap, in the axial direction, the area where the first irregular portion 51 is formed.

The first irregular portion 51 in the present embodiment is formed continuously concave and convex. However, the first irregular portion in the present disclosure is not limited to the present embodiment, and may be simply convex or concave. The first irregular portion 51 in the present embodiment is formed continuously corrugated. However, the first irregular portion in the present disclosure is not limited to the present embodiment, and may have a continuous zig zag shape, or a continuous serrated shape. The first irregular portion in the present disclosure may be formed to allow convexes or concaves to be scattered.

The first irregular portion 51 in the present embodiment is formed continuously along the circumferential direction R. However, the first irregular portion in the present disclosure is not limited to the present embodiment, and may be formed only in a predetermined angle range of the circumferential direction R. The first irregular portion in the present disclosure may be formed to allow convexes or concaves to be scattered in the circumferential direction R.

The first irregular portion 51 in the present embodiment is formed continuously along the radial direction D. However, the first irregular portion in the present disclosure is not limited to the present embodiment, and may be formed only in a predetermined range of the radial direction D. The first irregular portion in the present disclosure may be formed to allow convexes or concaves to be scattered in the radial direction D. In the case where the multiple concaves or multiple convexes are arranged in the radial direction D, they may be arranged at predetermined intervals in the radial direction D.

The first irregular portion 51 may be formed by processing a portion where the shoulder portion 20C is formed before the power storage device 10 is assembled. In this case, for example, the first irregular portion 51 and the shoulder portion 20C may be formed using a mold that rolls and moves in the circumferential direction of the outer can. Alternatively, the first irregular portion 51 may be formed simultaneously with the after-mentioned second irregular portion 52 by processing the shoulder portion 20C after the shoulder portion 20C is swagged. Also in this case, the first irregular portion 51 may be formed using a mold that rolls and moves in the circumferential direction of the outer can.

The second irregular portion 52 in the present embodiment is formed continuously concave and convex so as to be fitted to the first irregular portion 51 described above. The second irregular portion 52 in the present embodiment is formed continuously along the circumferential direction R. The second irregular portion 52 in the present embodiment is formed continuously along the radial direction D. Note that the second irregular portion in the present disclosure is not specifically limited as long as the shape is fitted to the first irregular portion 51 described above.

The second irregular portion 52 may be preliminarily processed and formed before the power storage device 10 is assembled, as long as the material of the gasket 33 is, for example, any one of PP (polypropylene), PPS (polyphenylene sulfide), PFA (perfluoroalkane), and PBT (polybutylene terephthalate) resins. Alternatively, the second irregular portion 52 may be formed simultaneously with the first irregular portion 51 through plastic deformation or elastic deformation by processing the shoulder portion 20C after the sealing assembly 30 is swagged.

As shown in FIG. 3, if the internal pressure of the outer can 20 increases in case of an abnormality in the power storage device 10, an upward force in the axial direction is applied to the positive electrode cap 31, the positive electrode cap 31 is curved to swell upward in the axial direction, and the sealing assembly 30 is prone to coming out of the shoulder portion 20C. In this case, the fitting between the first irregular portion 51 and the second irregular portion 52 increases the frictional force between the shoulder portion 20C and the gasket 33, and makes the sealing assembly 30 resistant to coming out of the shoulder portion 20C. Accordingly, the contents of the power storage device 10 are prevented from dispersing. As a result, the reliability of the power storage device 10 can be improved.

### [Other Embodiments]

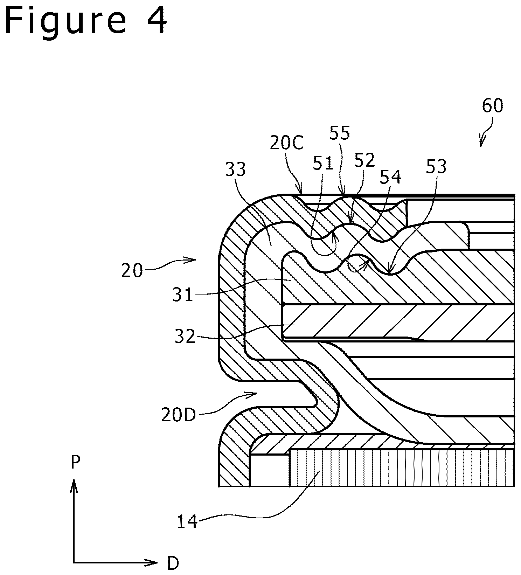

Referring to FIG. 4, a power storage device 60 that is another example of an embodiment is described.

The power storage device 60 has a configuration that includes the power storage device 10 described above, and additionally includes a third irregular portion 53 and a fourth irregular portion 54 which are described later in detail. In the following, the same components of the aforementioned power storage device 10 are assigned the same symbols, the detail description thereof is omitted, and only components different from those of the aforementioned power storage device 10 are described.

The positive electrode cap 31 of the sealing assembly 30 has a third irregular portion 53 that includes a surface that is close to an opening of the outer can 20, faces the gasket 33, and is formed to be concave and/or convex. The gasket 33 has the fourth irregular portion 54 that includes a surface that faces the sealing assembly 30, is formed to be concave and/or convex, and is fitted to the third irregular portion 53.

According to the third irregular portion 53 and the fourth irregular portion 54, the third irregular portion 53 and the fourth irregular portion 54 are fitted to each other, which increases the frictional force between the gasket 33 and the sealing assembly 30 (positive electrode cap 31), and can improve the strength of the sealing structure of the power storage device 10. Accordingly, the sealing assembly 30 is resistant to removal from the outer can 20 in the event of thermal runaway, and the contents of the power storage device 10 are prevented from dispersing. As a result, the reliability of the power storage device 10 can be improved.

The third irregular portion 53 is formed to be concave and/or convex, which increases the second moment of area, and can improve the strength. At the same time, the fourth irregular portion 54 is formed to be concave and/or convex, which increases the second moment of area, and can improve the strength. Accordingly, the strength of the sealing structure of the power storage device 10 can be improved.

The third irregular portion 53 in the present embodiment is formed continuously concave and convex. However, the third irregular portion in the present disclosure is not limited to the present embodiment, and may be simply convex or concave. The third irregular portion 53 in the present embodiment is formed continuously corrugated. However, the third irregular portion in the present disclosure is not limited to the present embodiment, and may have a continuous zig zag shape, or a continuous serrated shape. The third irregular portion in the present disclosure may be formed to allow convexes or concaves to be scattered.

The third irregular portion 53 in the present embodiment is formed continuously along the circumferential direction R. However, the third irregular portion in the present disclosure is not limited to the present embodiment, and may be formed only in a predetermined angle range of the circumferential direction R. The third irregular portion in the present disclosure may be formed to allow convexes or concaves to be scattered in the circumferential direction R.

The third irregular portion 53 in the present embodiment is formed continuously along the radial direction D. However, the third irregular portion in the present disclosure is not limited to the present embodiment, and may be formed only in a predetermined range of the radial direction D. The third irregular portion in the present disclosure may be formed to allow convexes or concaves to be scattered in the radial direction D. In the case where the multiple concaves or multiple convexes are arranged in the radial direction D, they may be arranged at predetermined intervals in the radial direction D.

Preferably, the third irregular portion 53 is formed by processing the positive electrode cap 31 as this positive electrode cap 31 before the power storage device 10 is assembled. The third irregular portion 53 may be formed simultaneously with the first irregular portion 51, the second irregular portion 52, and the after-mentioned fourth irregular portion 54, by processing the shoulder portion 20C and processing the positive electrode cap 31 via the gasket 33 after the sealing assembly 30 is swagged.

The fourth irregular portion 54 in the present embodiment is formed continuously concave and convex so as to be fitted to the third irregular portion 53 described above. The fourth irregular portion 54 in the present embodiment is formed continuously along the circumferential direction R. The fourth irregular portion 54 in the present embodiment is formed continuously along the radial direction D. Note that the fourth irregular portion in the present disclosure is not specifically limited as long as the shape is fitted to the third irregular portion 53 described above.

For example, the fourth irregular portion 54 may be preliminarily processed and formed before the power storage device 10 is assembled, as long as the material of the gasket 33 is a resin. The fourth irregular portion 54 may be formed simultaneously with the first irregular portion 51, the third irregular portion 53, the second irregular portion 52, and the third irregular portion 53, by processing the shoulder portion 20C and processing the positive electrode cap 31 via the gasket 33 after the sealing assembly 30 is swagged. The area where the second irregular portion 52 is formed and the area where the third irregular portion 53 is formed may overlap each other in the axial direction P.

The present disclosure is further described with reference to the following embodiments.

Configuration 1: A power storage device, comprising: an electrode assembly that includes a first electrode plate and a second electrode plate that are wound with a separator intervening therebetween; an electrolytic solution; a closed-bottom-cylindrical-shaped outer can that stores the electrode assembly and the electrolytic solution, and includes a shoulder portion extending inward in a radial direction from an open end; a sealing assembly that blocks an opening portion of the outer can; and a ring-shaped gasket that intervenes between the outer can and the sealing assembly, the outer can has a first irregular portion that is a surface of the shoulder portion that faces the gasket and is formed to be concave and/or convex.

Configuration 2: The power storage device according to Configuration 1, wherein the gasket has a second irregular portion that includes a surface that faces the shoulder portion and is formed to be concave and/or convex, and is fitted to the first irregular portion.

Configuration 3: The power storage device according to Configuration 2, wherein the first irregular portion and the second irregular portion are formed continuously along the circumferential direction.

Configuration 4: The power storage device according to any one of Configurations 1 to 3, wherein the first irregular portion and the second irregular portion are formed continuously along the radial direction.

Configuration 5: The power storage device according to any one of Configurations 1 to 4, wherein the sealing assembly has a third irregular portion that includes a surface that is close to an opening of the outer can, faces the gasket, and is formed to be concave and/or convex, and the gasket has a fourth irregular portion that includes a surface that faces the sealing assembly and is formed to be concave and/or convex, and is fitted to the third irregular portion.

Configuration 6: The power storage device according to Configuration 5, wherein the third irregular portion and the fourth irregular portion are formed continuously along a circumferential direction.

Configuration 7: The power storage device according to Configuration 5 or 6, wherein the third irregular portion and the fourth irregular portion are formed continuously along the radial direction.

Configuration 8: The power storage device according to any one of Configurations 5 to 7, wherein in an axial direction, the second irregular portion and the third irregular portion overlap each other.

Configuration 9: The power storage device according to any one of Configurations 1 to 3, wherein the shoulder portion has a fifth irregular portion formed on a surface on a reverse side of the surface on which the first irregular portion is formed, and in an axial direction, the first irregular portion and the fifth irregular portion overlap each other.

### [Another Embodiment (Power Storage Device)]

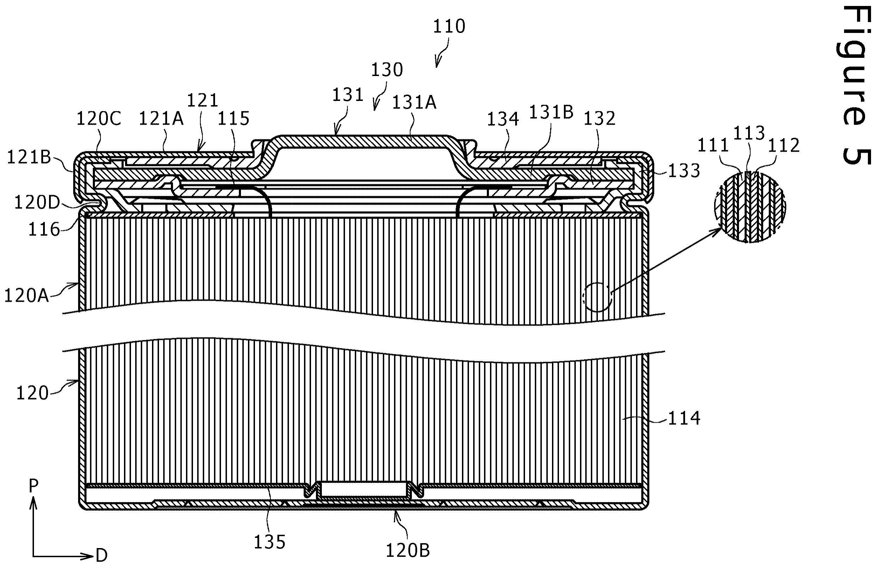

Referring to FIG. 5, a power storage device 110 that is another example of an embodiment is described.

The power storage device 110 includes: a wound-type electrode assembly 114 where a positive electrode plate 111 as a first polar plate, and a negative electrode plate 112 as a second polar plate are wound together, with a separator 113 intervening therebetween; an outer can 120 that accommodates the electrode assembly 114; and a sealing assembly 130 that blocks an opening of the outer can 120. The outer can 120 stores electrolytic solution along with the electrode assembly 114. The electrolytic solution in the present embodiment is non-aqueous electrolytic solution, but may be aqueous electrolytic solution. The power storage device 110 may be a capacitor.

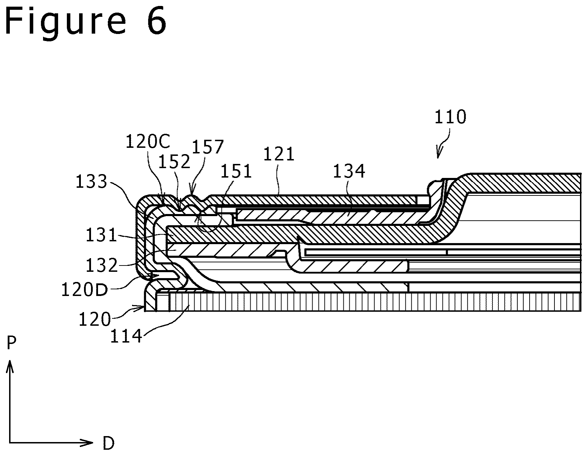

Although the details are described later, the power storage device 110 has: a first irregular portion 151 that is a surface of a negative electrode cap 121 that faces a shoulder portion 120C of the outer can 120 and is formed to be concave and/or convex; and a second irregular portion 152 that is a surface of the outer can 120 that faces the negative electrode cap 121, is formed to be concave and/or convex, and is fitted to the first irregular portion 151 (see FIG. 6). The first irregular portion 151 and the second irregular portion 152 can improve the reliability of the power storage device 110.

The positive electrode plate 111, the negative electrode plate 112, and the separator 113 are strip-shaped elongated bodies, and spirally wound. In this case, the positive electrode plate 111 and the negative electrode plate 112 are stacked in a deviating manner so as to protrude oppositely from each other, in the axial direction P (the height direction of the power storage device 110). The composite agent layer of the negative electrode plate 112 may be formed to have a dimension one size larger than that of the composite agent layer of the positive electrode plate 111 in order to prevent lithium from depositing. That is, the composite agent layer of the negative electrode plate 112 may be formed longer than the composite agent layer of the positive electrode plate 111 in the longitudinal direction and the width direction (transverse direction). The separator 113 is formed to have a dimension at least one size larger than the positive electrode plate 111. For example, two separators 113 are disposed so as to sandwich the positive electrode plate 111. Note that the electrode assembly 114 is not necessarily configured in the state where the positive electrode plate 111 and the negative electrode plate 112 are wound. For example, the electrode assembly 114 may be configured such that a plurality of positive electrode plates 111 and a plurality of negative electrode plates 112 are alternately stacked.

The positive electrode plate 111 includes a positive electrode core, and a positive electrode composite agent layer formed on at least one surface of the core. The positive electrode core may be made of, for example, metal foil that is stable in the potential range of the positive electrode plate 111, such as of aluminum or an aluminum alloy, a film on which the metal is disposed as the surface layer, or the like. Preferably, the positive electrode composite agent layer contains, for example, a positive-electrode active material, a conductive agent such as acetylene black, and a binding agent such as polyvinylidene fluoride, and is formed on each of the opposite surfaces of the positive electrode core. For example, lithium transition metal composite oxide is used as the positive-electrode active material.

The negative electrode plate 112 includes a negative electrode core, and a negative electrode composite agent layer formed on at least one surface of the core. The negative electrode core may be made of, for example, metal foil that is stable in the potential range of the negative electrode plate 112, such as of copper or a copper alloy, a film on which the metal is disposed as the surface layer, or the like. Preferably, the negative electrode composite agent layer contains, for example, a negative-electrode active material, and a binding agent such as styrene-butadiene rubber (SBR), and is formed on each of the opposite surfaces of the negative electrode core. For example, graphite, a silicon-containing compound or the like is used as the negative-electrode active material.

The non-aqueous electrolyte housed in the outer can 120 contains a non-aqueous solvent, and electrolyte salt dissolved in the non-aqueous solvent. The non-aqueous solvent may be, for example, any one of esters, ethers, nitriles, or amides, a composite solvent of two or more of them, etc. The non-aqueous solvent may contain a halogen-substituted compound made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF6. Note that the non-aqueous electrolyte may be gel electrolyte, solid electrolyte or the like instead of the electrolytic solution.

Above the electrode assembly 114 there are provided: a positive electrode lead 115 that extends from the axial-direction-P upper end of the electrode assembly 114, and connects the positive electrode plate 111 included in the electrode assembly 114 and the current collector plate 132 of the sealing assembly 130 to each other; and an upper insulating plate 116 disposed between the electrode assembly 114 and the sealing assembly 130. The positive electrode lead 115 electrically connects the positive electrode plate 111 and the sealing assembly 130 to each other. Accordingly, the positive electrode cap 131 of the sealing assembly 130 functions as a first polar external terminal (positive electrode external terminal). The upper insulating plate 116 prevents the positive electrode plate 111 and the positive electrode lead 115 from coming into contact with the outer can 120, and also prevents the positive electrode lead 115 from coming into contact with the negative electrode plate 112 of the electrode assembly 114.

Under the electrode assembly 114 there is provided a negative electrode current collector plate 135. A negative electrode core exposed portion (not shown) provided with no negative electrode composite agent layer in the negative electrode core material protrudes on the lower side of the negative electrode plate 112 in the axial direction P. The negative electrode core exposed portion is formed from an end of the elongated negative electrode plate 112 on a winding initiation side in the longitudinal direction (circumferential direction R) to an end of its winding completion side. The negative electrode core exposed portion is joined to the negative electrode current collector plate 135, and the negative electrode plate 112 and the negative electrode current collector plate 135 are electrically connected to each other. Furthermore, the negative electrode current collector plate 135 is joined to the inner surface of the bottom portion 120B of the outer can 120, and the negative electrode current collector plate 135 and the outer can 120 are electrically connected to each other. Note that in the power storage device in the present disclosure, the outer can and the positive electrode plate may be electrically connected to each other, and the sealing plate and the negative electrode plate may be electrically connected to each other. In this case, the positive electrode cap 131 functions as the negative electrode cap, and the negative electrode cap 121 functions as the positive electrode cap.

The outer can 120 is a metal container that has a closed-bottom cylindrical shape with the upper end in the axial direction P being open. The outer can 120 is generally made of metal, with iron as the principal component, but may be made of metal, with aluminum or the like as the principal component, in a case where the positive electrode plate 111 is connected. The outer can 120 includes: a cylindrical portion 120A that is formed to have a cylindrical shape; a bottom portion 120B that has a circular shape in bottom view; a shoulder portion 120C that is formed to have a ring shape extending inward in the circumferential direction R from the opening end of the cylindrical portion 120A; and a groove portion 120D that is formed along the circumferential direction R of the cylindrical portion 120A. The outer can 120 is provided with a negative electrode cap 121 that is a second polar external terminal (negative electrode external terminal).

The groove portion 120D is formed adjacent to the opening of the outer can 120 at a position apart from the shoulder portion 120C by a predetermined length. The groove portion 120D is a portion that is part of the cylindrical portion 120A projecting to the inside of the outer can 120, and is formed by applying a spinning process to the cylindrical portion 120A from the outside, for example. Note that at the position where the groove portion 120D is formed, the outer can 120 has a reduced diameter, and a narrow-lined groove is formed in the outer-peripheral surface of the cylindrical portion 120A. Preferably, the groove portion 120D has a substantially U-shaped section, and is formed to have a ring shape over the entire length of the cylindrical portion 120A in the circumferential direction R.

The bottom portion 120B of the outer can 120 may be provided with a safety valve mechanism that activates when an abnormality occurs in the power storage device 110. For example, a circular-ring-shaped engraved mark may be formed as a safety valve mechanism at the bottom portion 120B. When an abnormality occurs in the power storage device 110 and the internal pressure increases, the engraved mark may preferentially fracture, and a gas outlet may be formed in the bottom portion 120B. In a case where the negative electrode current collector plate 135 also serves as the bottom portion 120B, the negative electrode current collector plate 135 may be provided with an engraved mark so as to allow the engraved mark to fracture and release the gas when the internal pressure in the power storage device 110 may become a predetermined one or higher.

The negative electrode cap 121 is electrically connected to the negative electrode plate 112 via the outer can 120, and functions as a negative electrode external terminal. The negative electrode cap 121 is formed to have a ring shape that has an opening at a center portion in the radial direction D. The negative electrode cap 121 is welded to the cylindrical portion 120A of the outer can 120, and is electrically connected to the outer can 120. The negative electrode cap 121 includes a ring-shaped top plate portion 121A that faces the shoulder portion 120C in the axial direction; and a cylindrical skirt portion 121B that extends from the outer peripheral edge of the top plate portion 121A toward the groove portion 120D in the axial direction P. Part of the skirt portion 121B (e.g., the lower end of the skirt portion 121B) is swagged into the dent of the groove portion 120D. The opening and the first irregular portion 151 are provided for the top plate portion 121A. Note that the power storage device in the present disclosure does not necessarily include the skirt portion 121B as the negative electrode cap 121. The top plate portion 121A may be joined to the shoulder portion 120C by welding or the like, for example. Note that part of the skirt portion 121B that is swagged to the groove portion 120D may be formed to extend continuously annularly in the circumferential direction R of the outer can 120, or may be intermittently formed in the circumferential direction R. Such presence on the line extending in the radial direction D common to that of the first irregular portion 151 increases the holding strength of the shoulder portion 120C on the line in comparison with the power storage device that includes the negative electrode cap 121 without the skirt portion 121B.

The sealing assembly 130 is formed to have a disk shape as a whole, and includes a positive electrode cap 131, a current collector plate 132, a gasket 133, and an insulating member 134. The sealing assembly 130 is disposed above the groove portion 120D of the outer can 120, and is fixed to the upper end portion of the outer can 120. In more detail, the shoulder portion 120C of the outer can 120 is bent inward in the radial direction D and swagged to the sealing assembly 130, the sealing assembly 130 is fixed to the upper end portion of the outer can 120 by the shoulder portion 120C and the groove portion 120D of the outer can 120, and the sealing assembly 130 blocks the opening of the outer can 120.

The positive electrode cap 131 is electrically connected to the positive electrode plate 111 via the positive electrode lead 115 and the current collector plate 132, and functions as a positive electrode external terminal. The positive electrode cap 131 is a disk-shaped metal member, and includes: an elevated portion 131A whose center portion in the radial direction D protrudes to the outside of the power storage device 110; and a flange portion 131B formed around the elevated portion 131A. The positive electrode cap 131 is disposed on the upper surface side of the sealing assembly 130, and is exposed outside the outer can 120, thus forming a top surface of the power storage device 110. A positive electrode tab or the like of the current collector member of the power storage module is joined by welding to the elevated portion 131A.

The current collector plate 132 is electrically connected to the positive electrode plate 111 via the positive electrode lead 115, and functions as a positive electrode current collector plate. The current collector plate 132 is a metal member that has a diameter comparable to that of the positive electrode cap 131. The current collector plate 132 is formed to have a ring shape that has an opening at a center portion in the radial direction D. The current collector plate 132 is disposed closer to the electrode assembly 114 than the positive electrode cap 131. The current collector plate 132 is welded to the positive electrode cap 131, and is thus welded, for example, at a position closer to the outer peripheral edge of the positive electrode cap 131 than its center in the radial direction D.

The gasket 133 is a rubber member or a plastic member that prevents the positive electrode cap 131 and the current collector plate 132 from coming into contact with the outer can 120, and secures electrical insulation between the outer can 120 and the sealing assembly 130. The gasket 133 blocks the gap between the outer can 120 and the sealing assembly 130, and seals the inside of the power storage device 110. The gasket 133 is provided between the outer peripheral portion of the stacked body of the positive electrode cap 131 and the current collector plate 132, and the outer can 120. The gasket 133 covers the upper surface of the flange portion 131B of the positive electrode cap 131, the side surfaces of the positive electrode cap 131 and the current collector plate 132, and the lower surface of the current collector plate 132, at the outer peripheral portion of the stacked body.

The insulating member 134 is a rubber member or a plastic member for preventing contact between the positive electrode cap 131 and the negative electrode cap 121, and securing electric insulation between the positive electrode cap 131 and the negative electrode cap 121. The insulating member 134 is formed to have a ring shape that has an opening at a center portion in the radial direction D.

### [First Irregular Portion and Second Irregular Portion]

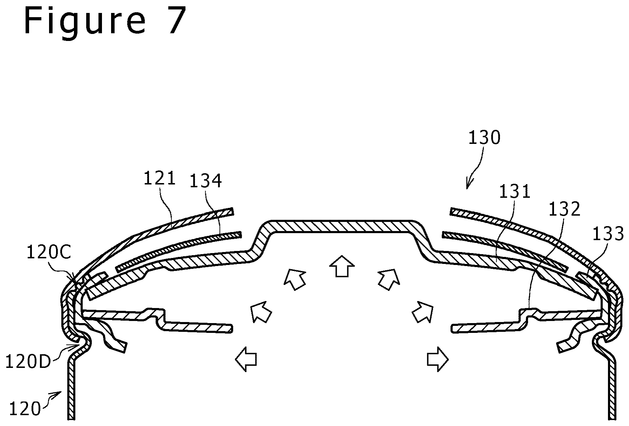

Referring to FIGS. 6 and 7, the first irregular portion 151 and the second irregular portion 152 are described.

As shown in FIG. 6, the negative electrode cap 121 includes the first irregular portion 151 that includes a surface that faces the positive electrode cap 131 and is formed to be concave and/or convex. The shoulder portion 120C of the outer can 120 has the second irregular portion 152 that includes a surface that faces the negative electrode cap 121, is formed to be concave and/or convex, and is fitted to the first irregular portion 151. Note that in the present disclosure, the second irregular portion 152 fitted to the first irregular portion 151 also encompasses a feature where the gasket 133 made of an electric body is pressed by the first irregular portion 151 and is deformed to follow the shape of the first irregular portion 151.

The power storage device 110 is mounted in an electric vehicle in some cases as described above. In recent years, to extend the cruising distance of an electric vehicle, a high capacity and high output power storage device is required. However, the high-capacity and high-output power storage device 110 has a higher internal pressure that occurs in the event of thermal runaway than the conventional power storage device does. Accordingly, the reliability is required to be improved by improving the strength of the sealing structure of the power storage device 110.

According to the first irregular portion 151 and the second irregular portion 152, the first irregular portion 151 and the second irregular portion 152 are fitted to each other, which increases the frictional force between the shoulder portion 120C and the gasket 133, and can improve the strength of the sealing structure of the power storage device 110. Accordingly, the sealing assembly 130 is resistant to removal from the outer can 120 in the event of thermal runaway, and the contents of the power storage device 110 are prevented from dispersing. As a result, the reliability of the power storage device 110 can be improved.

The first irregular portion 151 is formed to be concave and/or convex, which increases the second moment of area, and can improve the strength. At the same time, the second irregular portion 152 is formed to be concave and/or convex, which increases the second moment of area, and can improve the strength. Accordingly, the strength of the sealing structure of the power storage device 110 can be improved.

Furthermore, the negative electrode cap 121 includes the skirt portion 121B, which allows the negative electrode cap 121 to be fitted to the second irregular portion 152 and the groove portion 120D, and can more firmly hold the shoulder portion 120C than the negative electrode cap that includes no skirt portion 121B, and prevent the shoulder portion 120C from being deformed. The negative electrode cap 121 may have a seventh irregular portion 157 formed on a surface (upper surface) on a reverse side of the surface on which the first irregular portion 151 is formed. The area where the seventh irregular portion 157 is formed may overlap, in the axial direction P, the area where the first irregular portion 151 is formed. The convex portion of the first irregular portion 151 may be formed to be thicker than the remaining portion of the negative electrode cap 121.

The first irregular portion 151 in the present embodiment is formed continuously concave and convex. However, the first irregular portion in the present disclosure is not limited to the present embodiment, and may be simply convex or concave. The first irregular portion 151 in the present embodiment is formed continuously corrugated. However, the first irregular portion in the present disclosure is not limited to the present embodiment, and may have a continuous zig zag shape, or a continuous serrated shape. The first irregular portion in the present disclosure may be formed to allow convexes or concaves to be scattered.

The first irregular portion 151 in the present embodiment is formed continuously along the circumferential direction R. However, the first irregular portion in the present disclosure is not limited to the present embodiment, and may be formed only in a predetermined angle range of the circumferential direction R. The first irregular portion in the present disclosure may be formed to allow convexes or concaves to be scattered in the circumferential direction R.

The first irregular portion 151 in the present embodiment is formed continuously along the radial direction D. However, the first irregular portion in the present disclosure is not limited to the present embodiment, and may be formed only in a predetermined range of the radial direction D. The first irregular portion in the present disclosure may be formed to allow convexes or concaves to be scattered in the radial direction D. In the case where the multiple concaves or multiple convexes are arranged in the radial direction D, they may be arranged at predetermined intervals in the radial direction D.

The first irregular portion 151 may be formed by processing the negative electrode cap 121 as this negative electrode cap 121 before the power storage device 110 is assembled. Also in this case, the first irregular portion 151 may be formed using a mold that rolls and moves in the circumferential direction R on the negative electrode cap 121. The first irregular portion 151 may be formed simultaneously with the after-mentioned second irregular portion 152, by processing the negative electrode cap 121 after the negative electrode cap 121 is joined to the shoulder portion 120C.

The second irregular portion 152 in the present embodiment is formed continuously concave and convex so as to be fitted to the first irregular portion 151 described above. The second irregular portion 152 in the present embodiment is formed continuously along the circumferential direction R. The second irregular portion 152 in the present embodiment is formed continuously along the radial direction D. Note that the second irregular portion in the present disclosure is not specifically limited as long as the shape is fitted to the first irregular portion described above.

The second irregular portion 152 may be preliminarily processed and formed before the power storage device 110 is assembled. In this case, the second irregular portion 152 may be formed using, for example, a mold that rolls and moves in the circumferential direction R of the outer can 120. The second irregular portion 152 may be formed simultaneously with the first irregular portion 151, by processing the negative electrode cap 121 after the negative electrode cap 121 is joined to the shoulder portion 120C. Also in this case, the first irregular portion 151 and the second irregular portion 152 may be formed using a mold that rolls and moves in the circumferential direction R on the negative electrode cap 121.

As shown in FIG. 7, if the internal pressure of the outer can 120 increases in case of an abnormality in the power storage device 110, an upward force in the axial direction is applied to the positive electrode cap 131, the positive electrode cap 131 is curved to swell upward in the axial direction, and the sealing assembly 130 is prone to coming out of the shoulder portion 120C. In this case, the first irregular portion 151 and the second irregular portion 152 are fitted to each other, which increases the frictional force between the negative electrode cap 121 and the shoulder portion 120C, and makes the negative electrode cap 121 resistant to coming out of the shoulder portion 120C. Accordingly, the contents of the power storage device 110 are prevented from dispersing. As a result, the reliability of the power storage device 110 can be improved.

### [Other Embodiments]

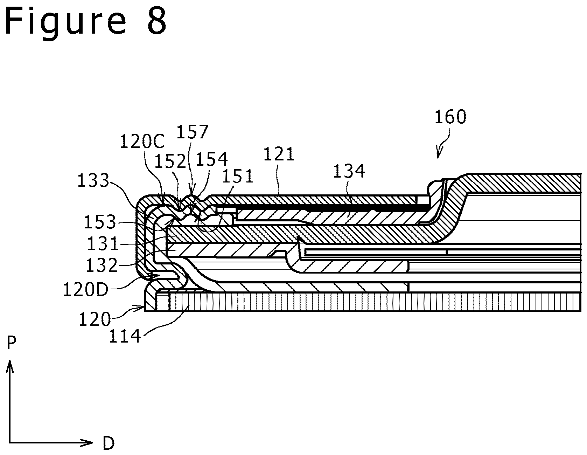

Referring to FIG. 8, a power storage device 160 that is another example of an embodiment is described.

The power storage device 160 has a configuration that includes the power storage device 110 described above, and additionally includes a third irregular portion 153 and a fourth irregular portion 154 which are described later in detail. In the following, the same components of the aforementioned power storage device 110 are assigned the same symbols, the detail description thereof is omitted, and only components different from those of the aforementioned power storage device 110 are described.

The shoulder portion 120C of the outer can 120 has the third irregular portion 153 that includes a surface that faces the gasket 133 and is formed to be concave and/or convex. The gasket 133 further has the fourth irregular portion 154 that includes a surface that faces the shoulder portion 120C, is formed to be concave and/or convex, and is fitted to the third irregular portion 153.

According to the third irregular portion 153 and the fourth irregular portion 154, the third irregular portion 153 and the fourth irregular portion 154 are fitted to each other, which increases the frictional force between the shoulder portion 120C and the gasket 133, and can improve the strength of the sealing structure of the power storage device 110. Accordingly, the sealing assembly 130 is resistant to removal from the outer can 120 in the event of thermal runaway, and the contents of the power storage device 110 are prevented from dispersing. As a result, the reliability of the power storage device 110 can be improved.

The third irregular portion 153 is formed to be concave and/or convex, which increases the second moment of area, and can improve the strength. At the same time, the fourth irregular portion 154 is formed to be concave and/or convex, which increases the second moment of area, and can improve the strength. Accordingly, the strength of the sealing structure of the power storage device 110 can be improved.

The third irregular portion 153 in the present embodiment is formed continuously concave and convex. However, the third irregular portion in the present disclosure is not limited to the present embodiment, and may be simply convex or concave. The third irregular portion 153 in the present embodiment is formed continuously corrugated. However, the third irregular portion in the present disclosure is not limited to the present embodiment, and may have a continuous zig zag shape, or a continuous serrated shape. The sixth irregular portion in the present disclosure may be formed to allow convexes or concaves to be scattered.

The third irregular portion 153 in the present embodiment is formed continuously along the circumferential direction R. However, the third irregular portion in the present disclosure is not limited to the present embodiment, and may be formed only in a predetermined angle range of the circumferential direction R. The third irregular portion in the present disclosure may be formed to allow convexes or concaves to be scattered in the circumferential direction R.

The third irregular portion 153 in the present embodiment is formed continuously along the radial direction D. However, the third irregular portion in the present disclosure is not limited to the present embodiment, and may be formed only in a predetermined range of the radial direction D. The third irregular portion in the present disclosure may be formed to allow convexes or concaves to be scattered in the radial direction D. In the case where the multiple concaves or multiple convexes are arranged in the radial direction D, they may be arranged at predetermined intervals in the radial direction D.

Preferably, the third irregular portion 153 is formed simultaneously with the second irregular portion 152 described above. The area where the second irregular portion 152 is formed and the area where the third irregular portion 153 is formed may overlap each other in the axial direction P.

The fourth irregular portion 154 in the present embodiment is formed continuously concave and convex so as to be fitted to the third irregular portion 153 described above. The fourth irregular portion 154 in the present embodiment is formed continuously along the circumferential direction R. The fourth irregular portion 154 in the present embodiment is formed continuously along the radial direction D. Note that the third irregular portion in the present disclosure is not specifically limited as long as the shape is fitted to the third irregular portion described above.

The fourth irregular portion 154 may be preliminarily processed and formed before the power storage device 110 is assembled, as long as the material of the gasket 133 is, for example, any one of PP (polypropylene), PPS (polyphenylene sulfide), PFA (perfluoroalkane), PBT (polybutylene terephthalate), and other resins. Alternatively, the fourth irregular portion 154 may be formed simultaneously with the second irregular portion 152 and the third irregular portion 153 through plastic deformation or elastic deformation by processing the shoulder portion 120C after the sealing assembly 130 is swagged.

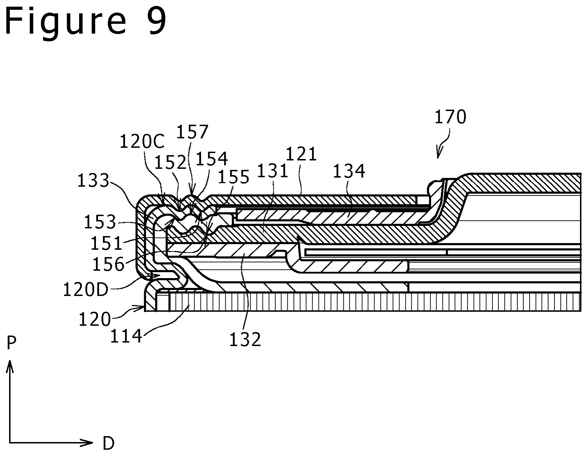

Referring to FIG. 9, a power storage device 170 that is another example of an embodiment is described.

The power storage device 170 has a configuration that includes the power storage device 160 described above, and additionally includes a sixth irregular portion 155 and a fifth irregular portion which are described later in detail.

The positive electrode cap 131 of the sealing assembly 130 has the sixth irregular portion 155 that includes a surface that is close to an opening of the outer can 120, faces the gasket 133, and is formed to be concave and/or convex. The gasket 133 has the fifth irregular portion 156 that includes a surface that faces the sealing assembly 130, is formed to be concave and/or convex, and is fitted to the sixth irregular portion 155.

According to the sixth irregular portion 155 and the fifth irregular portion 156, the sixth irregular portion 155 and the fifth irregular portion 156 are fitted to each other, which increases the frictional force between the gasket 133 and the sealing assembly 130 (positive electrode cap 131), and can improve the strength of the sealing structure of the power storage device 110. Accordingly, the sealing assembly 130 is resistant to removal from the outer can 120 in the event of thermal runaway, and the contents of the power storage device 110 are prevented from dispersing. As a result, the reliability of the power storage device 110 can be improved.

The sixth irregular portion 155 is formed to be concave and/or convex, which increases the second moment of area, and can improve the strength. At the same time, the fifth irregular portion 156 is formed to be concave and/or convex, which increases the second moment of area, and can improve the strength. Accordingly, the strength of the sealing structure of the power storage device 110 can be improved.

The sixth irregular portion 155 in the present embodiment is formed continuously concave and convex. However, the sixth irregular portion in the present disclosure is not limited to the present embodiment, and may be simply convex or concave. The sixth irregular portion 155 in the present embodiment is formed continuously corrugated. However, the sixth irregular portion in the present disclosure is not limited to the present embodiment, and may have a continuous zig zag shape, or a continuous serrated shape. The sixth irregular portion in the present disclosure may be formed to allow convexes or concaves to be scattered.

The sixth irregular portion 155 in the present embodiment is formed continuously along the circumferential direction R. However, the sixth irregular portion in the present disclosure is not limited to the present embodiment, and may be formed only in a predetermined angle range of the circumferential direction R. The sixth irregular portion in the present disclosure may be formed to allow convexes or concaves to be scattered in the circumferential direction R.

The sixth irregular portion 155 in the present embodiment is formed continuously along the radial direction D. However, the sixth irregular portion 155 in the present disclosure is not limited to the present embodiment, and may be formed only in a predetermined range of the radial direction D. The sixth irregular portion in the present disclosure may be formed to allow convexes or concaves to be scattered in the radial direction D. In the case where the multiple concaves or multiple convexes are arranged in the radial direction D, they may be arranged at predetermined intervals in the radial direction D.

Preferably, the sixth irregular portion 155 is formed by processing the positive electrode cap 131 before the power storage device 110 is assembled.

The fifth irregular portion 156 in the present embodiment is formed continuously concave and convex so as to be fitted to the sixth irregular portion 155 described above. The fifth irregular portion 156 is formed continuously along the circumferential direction R. The fifth irregular portion 156 is formed continuously along the radial direction D. Note that the fifth irregular portion in the present disclosure is not specifically limited as long as the shape is fitted to the sixth irregular portion described above.

For example, the fifth irregular portion 156 may be preliminarily processed and formed before the power storage device 110 is assembled, as long as the material of the gasket 133 is a resin, such as **. The area where the fourth irregular portion 154 is formed and the area where the fifth irregular portion 156 is formed may overlap each other in the axial direction P.

The present disclosure is further described with reference to the following embodiments.

Configuration 1: A power storage device, comprising: an electrode assembly that includes a first electrode plate and a second electrode plate that are wound with a separator intervening therebetween; an electrolytic solution; a closed-bottom-cylindrical-shaped outer can that stores the electrode assembly and the electrolytic solution, and includes a shoulder portion extending inward in a radial direction from an open end; a sealing assembly that blocks an opening portion of the outer can; a ring-shaped gasket that intervenes between the outer can and the sealing assembly; and a second electrode terminal that is provided close to an opening of the outer can, and is electrically connected to the outer can, wherein the second electrode terminal has a first irregular portion that is a surface of the outer can that faces the shoulder portion and is formed to be concave and/or convex, and the outer can has a second irregular portion that includes a surface of the shoulder portion that faces the second electrode terminal, is formed to be concave and/or convex, and is fitted to the first irregular portion.

Configuration 2: The power storage device according to Configuration 1, wherein the first irregular portion and the second irregular portion are formed continuously along the circumferential direction.

Configuration 3: The power storage device according to Configuration 1 or 2, wherein the first irregular portion and the second irregular portion are formed continuously along the radial direction.

Configuration 4: The power storage device according to any one of Configurations 1 to 3, wherein the outer can has a third irregular portion that includes a surface of the shoulder portion, the surface facing the gasket and being formed to be concave and/or convex, and the gasket has a fourth irregular portion that includes a surface that faces the shoulder portion and is formed to be concave and/or convex, and is fitted to the third irregular portion.

Configuration 5: The power storage device according to Configuration 4, wherein the third irregular portion and the fourth irregular portion are formed continuously along a circumferential direction.

Configuration 6: The power storage device according to Configuration 4, wherein the second irregular portion and the third irregular portion overlap each other in an axial direction.

Configuration 7: The power storage device according to any one of Configurations 4 to 6, wherein the third irregular portion and the fourth irregular portion are formed continuously along the radial direction.

Configuration 8: The power storage device according to any one of Configurations 1 to 7, wherein the sealing assembly has a sixth irregular portion that includes a surface that is close to an opening of the outer can, faces the gasket, and is formed to be concave and/or convex, and the gasket has a fifth irregular portion that includes a surface that faces the sealing assembly, is formed to be concave and/or convex, and is fitted to the sixth irregular portion.

Configuration 9: The power storage device according to Configuration 8, wherein the sixth irregular portion and the fifth irregular portion are formed continuously along the circumferential direction.

Configuration 10: The power storage device according to Configuration 8 or 9, wherein the sixth irregular portion and the fifth irregular portion are formed continuously along the radial direction.

Configuration 11: The power storage device according to Configuration 4, wherein the sealing assembly has a sixth irregular portion that includes a surface that is close to an opening of the outer can, faces the gasket, and is formed to be concave and/or convex, and the gasket has a fifth irregular portion that includes a surface that faces the sealing assembly, is formed to be concave and/or convex, and is fitted to the sixth irregular portion.

Configuration 12: The power storage device according to Configuration 1, wherein a ring-shaped groove portion is formed in an outer-peripheral surface of the outer can, the second electrode terminal includes: a ring-shaped top plate portion that faces the shoulder portion; and a cylindrical skirt portion that extends from the top plate portion toward the groove portion in an axial direction, the first irregular portion is formed on the top plate portion, and part of the skirt portion is bent to be inserted into the groove portion.

Note that the present disclosure is not limited to the aforementioned embodiments and their modified examples, and it is a matter of course that various change and improvement can be made in a range of the items described in the claims of the present application.

### REFERENCE SIGNS LIST

10 Power storage device, 11 Positive electrode plate (first electrode plate), 12 Negative electrode plate (second electrode plate), 13 Separator, 14 Electrode assembly, 15 Positive electrode lead, 16 Upper insulating plate, 20 Outer can, 20 Power storage device, 20A Cylindrical portion, 20B Bottom portion, 20C Shoulder portion, 20D Groove portion, 21 Negative electrode cap, 30 Sealing assembly, 31 Positive electrode cap, 31A Elevated portion, 31B Flange portion, 32 Current collector plate, 33 Gasket, 35 Negative electrode current collector plate, 51 First irregular portion, 52 Second irregular portion, 53 Third irregular portion, 54 Fourth irregular portion, 60 Power storage device, 110 Power storage device, 111 Positive electrode plate (first electrode plate), 112 Negative electrode plate (second electrode plate), 113 Separator, 114 Electrode assembly, 115 Positive electrode lead, 116 Upper insulating plate, 120 Outer can, 120A Cylindrical portion, 120B Bottom portion, 120C Shoulder portion, 120D Groove portion, 121 Negative electrode cap, 130 Sealing assembly, 131 Positive electrode cap, 131A Elevated portion, 131B Flange portion, 132 Current collector plate, 133 Gasket, 134 Insulating member, 135 Negative electrode current collector plate, 151 First irregular portion, 152 Second irregular portion, 153 Third irregular portion, 154 Fourth irregular portion, 155 Sixth irregular portion, 156 Fifth irregular portion, 157 Seventh irregular portion, 160 Power storage device, 170 Power storage device, D Radial direction, P Axial direction, R Circumferential direction

## Claims

1. A power storage device, comprising: an electrode assembly that includes a first electrode plate and a second electrode plate that are wound with a separator intervening therebetween; an electrolytic solution; a closed-bottom-cylindrical-shaped outer can that stores the electrode assembly and the electrolytic solution, and includes a shoulder portion extending inward in a radial direction from an open end; a sealing assembly that blocks an opening portion of the outer can; and a ring-shaped gasket that intervenes between the outer can and the sealing assembly, wherein
the shoulder portion has a first surface that faces the gasket, and a second surface that is a back surface of the first surface, and
at least one of the first surface and the second surface has a first irregular portion formed to be concave and/or convex.

2. The power storage device according to Claim 1, wherein
the first irregular portion is formed on the first surface.

3. The power storage device according to Claim 2, wherein
the gasket has a second irregular portion that includes a surface that faces the shoulder portion and is formed to be concave and/or convex, and is fitted to the first irregular portion.

4. The power storage device according to Claim 3, wherein
the first irregular portion and the second irregular portion are formed continuously along a circumferential direction.

5. The power storage device according to Claim 3 or 4, wherein
the first irregular portion and the second irregular portion are formed continuously along the radial direction.

6. The power storage device according to any one of Claims 3 to 5, wherein
the sealing assembly has a third irregular portion that includes a surface that is close to an opening of the outer can, faces the gasket, and is formed to be concave and/or convex, and
the gasket has a fourth irregular portion that includes a surface that faces the sealing assembly and is formed to be concave and/or convex, and is fitted to the third irregular portion.

7. The power storage device according to Claim 6, wherein
the third irregular portion and the fourth irregular portion are formed continuously along a circumferential direction.

8. The power storage device according to Claim 6 or 7, wherein
the third irregular portion and the fourth irregular portion are formed continuously along the radial direction.

9. The power storage device according to any one of Claims 6 to 8, wherein
in an axial direction, the second irregular portion and the third irregular portion overlap each other.

10. The power storage device according to any one of Claims 2 to 4, wherein
the shoulder portion has a fifth irregular portion formed on a surface on a reverse side of the surface on which the first irregular portion is formed, and
in an axial direction, the first irregular portion and the fifth irregular portion overlap each other.

11. The power storage device according to Claim 1, further comprising
a second electrode terminal that is provided close to an opening of the outer can, and is electrically connected to the outer can, wherein
the first irregular portion is formed on the second surface, and
the second electrode terminal has a second irregular portion that is a surface that faces the shoulder portion and is formed to be concave and/or convex.

12. The power storage device according to Claim 11, wherein
the first irregular portion and the second irregular portion are formed continuously along a circumferential direction.

13. The power storage device according to Claim 11 or 12, wherein
the first irregular portion and the second irregular portion are formed continuously along the radial direction.

14. The power storage device according to any one of Claims 11 to 13, wherein
the outer can has a third irregular portion that includes a surface of the shoulder portion, the surface facing the gasket and being formed to be concave and/or convex, and
the gasket has a fourth irregular portion that includes a surface that faces the shoulder portion and is formed to be concave and/or convex, and is fitted to the third irregular portion.

15. The power storage device according to Claim 14, wherein
the third irregular portion and the fourth irregular portion are formed continuously along a circumferential direction.

16. The power storage device according to Claim 14, wherein
the second irregular portion and the third irregular portion overlap each other in an axial direction.

17. The power storage device according to any one of Claims 14 to 16, wherein
the third irregular portion and the fourth irregular portion are formed continuously along the radial direction.

18. The power storage device according to any one of Claims 11 to 17, wherein
the sealing assembly has a sixth irregular portion that includes a surface that is close to the opening of the outer can, faces the gasket, and is formed to be concave and/or convex, and
the gasket has a fifth irregular portion that includes a surface that faces the sealing assembly and is formed to be concave and/or convex, and is fitted to the sixth irregular portion.

19. The power storage device according to Claim 18, wherein
the sixth irregular portion and the fifth irregular portion are formed continuously along a circumferential direction.

20. The power storage device according to Claim 18 or 19, wherein
the sixth irregular portion and the fifth irregular portion are formed continuously along the radial direction.

21. The power storage device according to Claim 14, wherein
the sealing assembly has a sixth irregular portion that includes a surface that is close to the opening of the outer can, faces the gasket, and is formed to be concave and/or convex,
the gasket has a fifth irregular portion that includes a surface that faces the sealing assembly and is formed to be concave and/or convex, and is fitted to the sixth irregular portion, and
the fourth irregular portion and the fifth irregular portion overlap each other in an axial direction.

22. The power storage device according to Claim 11, wherein
a ring-shaped groove portion is formed in an outer-peripheral surface of the outer can,
the second electrode terminal includes: a ring-shaped top plate portion that faces the shoulder portion; and a cylindrical skirt portion that extends from the top plate portion toward the groove portion in an axial direction,
the first irregular portion is formed on the top plate portion, and
part of the skirt portion is bent to be inserted into the groove portion.
